# EUROPEAN PATENT APPLICATION

(11) **EP 3 349 521 A1**
(43) Date of publication of application: **18.07.2018**
(21) Application number: 15905079.8
(22) Date of filing: 30.09.2015
(51) Int. Cl.: H04W 72/04, H04B 7/06

(54) **METHOD AND APPARATUS FOR TRANSMITTING CHANNEL STATE INFORMATION-REFERENCE SIGNAL (CSI-RS)**

(71) Applicant: Huawei Technologies Co., Ltd., Longgang District Shenzhen, Guangdong 518129 (CN)
(72) Inventor: XU, Kai, Shenzhen Guangdong 518129 (CN); LI, Xiaocui, Shenzhen Guangdong 518129 (CN)
(74) Representative: Isarpatent
(86) International application number: PCT/CN2015/091211
(87) International publication number: WO 2017/054167

(57) **Abstract**

Embodiments of the present invention provide a method and an apparatus for transmitting a channel state information-reference signal CSI-RS. The method includes: determining, by a base station based on one physical resource block PRB pair, a first configuration mode used for a CSI-RS, where a resource element RE occupied in the first configuration mode is obtained by aggregating all or a part of resource elements REs occupied in at least two second configuration modes used for the CSI-RS; the first configuration mode is a configuration mode for more than eight CSI-RS ports, and includes a correspondence between each CSI-RS port and a resource element RE; and the second configuration mode is a configuration mode for eight CSI-RS ports, and comprises a correspondence between each CSI-RS port and a resource element RE; and transmitting, by the base station, the CSI-RS to user equipment by using the first configuration mode. This ensures that a user terminal can receive a CSI-RS signal in time while improving a system throughput, so as to improve channel estimation efficiency.

## Description

### TECHNICAL FIELD

Embodiments of the present invention relate to communications technologies, and in particular, to a method and an apparatus for transmitting a channel state information-reference signal (Channel State Information-Reference Signal, CSI-RS for short).

### BACKGROUND

As a quantity of user terminals increases, and a base station supports only a maximum of eight CSI-RS ports in a current Long Term Evolution Advanced (Long Term Evolution Advanced, LTE for short) release 12, a throughput of an LTE system is relatively low. Therefore, increasing a quantity of CSI-RS ports for a base station is an effective means for improving a system throughput.

In a case in which a base station supports eight CSI-RS ports in the LTE Release 12, there are usually five configuration modes corresponding to one physical resource block (Physical Resource Block, PRB for short) pair, and each configuration mode represents a correspondence between the eight CSI-RS ports and resource elements (Resource Element, RE for short). There is a corresponding correspondence between the ports and the REs. How to correspond more CSI-RS ports to limited resource elements (Resource Element, RE for short) is a problem that urgently needs to be resolved.

In the prior art, a problem about a correspondence between a CSI-RS port and an RE is resolved in the following manner: If a quantity of ports currently increases to 12, and sequence numbers of the 12 ports are 0 to 11, five configuration modes for eight ports are still used for ports 0 to 7 in a subframe, and in another subframe, REs corresponding to the first four ports of the eight ports are used by ports 8 to 11 for transmission of a CSI-RS signal.

However, the increased ports in the prior art can send the CSI-RS signal only in the another subframe. As a result, a user terminal cannot receive the CSI-RS signal in time, thereby causing a problem of relatively low channel estimation efficiency. In addition, when a time domain of a channel changes greatly, channel estimation performance is greatly affected, thereby affecting system performance.

### SUMMARY

Embodiments of the present invention provide a method and an apparatus for transmitting a channel state information-reference signal CSI-RS, to ensure that a user terminal can receive a CSI-RS signal in time while improving a system throughput, so as to improve channel estimation efficiency.

According to a first aspect, an embodiment of the present invention provides a method for transmitting a channel state information-reference signal CSI-RS, including: determining, by a base station based on one physical resource block PRB pair, a first configuration mode used for a CSI-RS, where a resource element RE occupied in the first configuration mode is obtained by aggregating all or a part of resource elements REs occupied in at least two second configuration modes used for the CSI-RS; the first configuration mode is a configuration mode for more than eight CSI-RS ports, and includes a correspondence between each CSI-RS port and a resource element RE; and the second configuration mode is a configuration mode for eight CSI-RS ports, and includes a correspondence between each CSI-RS port and a resource element RE; and transmitting, by the base station, the CSI-RS to user equipment by using the first configuration mode.

With reference to the first aspect, in a first possible implementation of the first aspect, when there are 12 CSI-RS ports in the first configuration mode, the determining, by a base station based on one PRB pair, a first configuration mode used for a CSI-RS includes: determining, by the base station according to an order of port numbers, that the first eight CSI-RS ports in the first configuration mode occupy all REs occupied in any one of the second configuration modes, and that the last four CSI-RS ports in the first configuration mode occupy a part of REs occupied in one or more other second configuration modes.

With reference to the first aspect, in a second possible implementation of the first aspect, when there are 16 CSI-RS ports in the first configuration mode, the determining, by a base station based on one PRB pair, a first configuration mode used for a CSI-RS includes: determining, by the base station according to an order of port numbers, that the first eight CSI-RS ports in the first configuration mode occupy all REs occupied in any one of the second configuration modes, and that the last eight CSI-RS ports in the first configuration mode occupy all REs occupied in another second configuration mode, or that the last eight CSI-RS ports in the first configuration mode occupy a part of resource elements REs occupied in a plurality of other second configuration modes.

With reference to the first aspect, in a third possible implementation of the first aspect, when there are 12 or 16 CSI-RS ports in the first configuration mode, the determining, by a base station based on one PRB pair, a first configuration mode used for a CSI-RS includes: determining, by the base station, a part or all of REs in the second configuration mode that are not aggregated and that are in a plurality of PRB pairs in a time-domain or frequency-domain direction, and establishing a correspondence between the part or all of the REs that are not aggregated and the CSI-RS ports in the first configuration mode.

With reference to the first aspect to the third possible implementation of the first aspect, in a fourth possible implementation of the first aspect, the method further includes: determining, by the base station, a total quantity of first configuration modes corresponding to the plurality of PRB pairs in the time-domain or frequency-domain direction.

According to a second aspect, an embodiment of the present invention provides a method for transmitting a channel state information-reference signal CSI-RS, including: receiving, by user equipment, a CSI-RS transmitted by a base station by using a first configuration mode, where the first configuration mode used for the CSI-RS is determined by the base station based on one physical resource block PRB pair; a resource element RE occupied in the first configuration mode is obtained by aggregating all or a part of resource elements REs occupied in at least two second configuration modes used for the CSI-RS; the first configuration mode is a configuration mode for more than eight CSI-RS ports, and includes a correspondence between each CSI-RS port and a resource element RE; and the second configuration mode is a configuration mode for eight CSI-RS ports, and includes a correspondence between each CSI-RS port and a resource element RE.

With reference to the second aspect, in a first possible implementation of the second aspect, when there are 12 CSI-RS ports in the first configuration mode, that the first configuration mode used for the CSI-RS is determined by the base station based on one physical resource block PRB pair includes: determining, by the base station according to an order of port numbers, that the first eight CSI-RS ports in the first configuration mode occupy all REs occupied in any one of the second configuration modes, and that the last four CSI-RS ports in the first configuration mode occupy a part of REs occupied in one or more other second configuration modes.

With reference to the second aspect, in a second possible implementation of the second aspect, when there are 16 CSI-RS ports in the first configuration mode, that the first configuration mode used for the CSI-RS is determined by the base station based on one physical resource block PRB pair includes: determining, by the base station according to an order of port numbers, that the first eight CSI-RS ports in the first configuration mode occupy all REs occupied in any one of the second configuration modes, and that the last eight CSI-RS ports in the first configuration mode occupy all REs occupied in another second configuration mode, or that the last eight CSI-RS ports in the first configuration mode occupy a part of resource elements REs occupied in a plurality of other second configuration modes.

With reference to the second aspect, in a third possible implementation of the second aspect, when there are 12 or 16 CSI-RS ports in the first configuration mode, that the first configuration mode used for the CSI-RS is determined by the base station based on one physical resource block PRB pair includes: determining, by the base station, a part or all of REs in the second configuration mode that are not aggregated and that are in a plurality of PRB pairs in a time-domain or frequency-domain direction, and establishing a correspondence between the part or all of the REs that are not aggregated and the CSI-RS ports in the first configuration mode.

According to a third aspect, an embodiment of the present invention provides an apparatus for transmitting a channel state information-reference signal CSI-RS. The apparatus is a base station, and includes a determining module and a transmission module, where the determining module is configured to determine, based on one physical resource block PRB pair, a first configuration mode used for a CSI-RS, where a resource element RE occupied in the first configuration mode is obtained by aggregating all or a part of resource elements REs occupied in at least two second configuration modes used for the CSI-RS; the first configuration mode is a configuration mode for more than eight CSI-RS ports, and includes a correspondence between each CSI-RS port and a resource element RE; and the second configuration mode is a configuration mode for eight CSI-RS ports, and includes a correspondence between each CSI-RS port and a resource element RE; and the transmission module is configured to transmit the CSI-RS to user equipment by using the first configuration mode.

With reference to the third aspect, in a first possible implementation of the third aspect, when there are 12 CSI-RS ports in the first configuration mode, the determining module is specifically configured to determine, according to an order of port numbers, that the first eight CSI-RS ports in the first configuration mode occupy all REs occupied in any one of the second configuration modes, and that the last four CSI-RS ports in the first configuration mode occupy a part of REs occupied in one or more other second configuration modes.

With reference to the third aspect, in a second possible implementation of the third aspect, when there are 16 CSI-RS ports in the first configuration mode, the determining module is specifically configured to determine, according to an order of port numbers, that the first eight CSI-RS ports in the first configuration mode occupy all REs occupied in any one of the second configuration modes, and that the last eight CSI-RS ports in the first configuration mode occupy all REs occupied in another second configuration mode, or that the last eight CSI-RS ports in the first configuration mode occupy a part of resource elements REs occupied in a plurality of other second configuration modes.

With reference to the third aspect, in a third possible implementation of the third aspect, when there are 12 or 16 CSI-RS ports in the first configuration mode, the determining module is specifically configured to: determine a part or all of REs in the second configuration mode that are not aggregated and that are in a plurality of PRB pairs in a time-domain or frequency-domain direction, and establish a correspondence between the part or all of the REs that are not aggregated and the CSI-RS ports in the first configuration mode.

With reference to the third aspect to the third possible implementation of the third aspect, in a fourth possible implementation of the third aspect, the determining module is further configured to determine a total quantity of first configuration modes corresponding to the plurality of PRB pairs in the time-domain or frequency-domain direction.

According to a fourth aspect, an embodiment of the present invention provides an apparatus for transmitting a channel state information-reference signal CSI-RS. The apparatus is user equipment, and includes a receiving module and a storage module, where the receiving module is configured to receive a CSI-RS transmitted by a base station by using a first configuration mode; and the storage module is configured to store the CSI-RS, where the first configuration mode used for the CSI-RS is determined by the base station based on one physical resource block PRB pair; a resource element RE occupied in the first configuration mode is obtained by aggregating all or a part of resource elements REs occupied in at least two second configuration modes used for the CSI-RS; the first configuration mode is a configuration mode for more than eight CSI-RS ports, and includes a correspondence between each CSI-RS port and a resource element RE; and the second configuration mode is a configuration mode for eight CSI-RS ports, and includes a correspondence between each CSI-RS port and a resource element RE.

According to a fifth aspect, an embodiment of the present invention provides an apparatus for transmitting a channel state information-reference signal CSI-RS. The apparatus is a base station, and includes a processor and a transmitter, where the processor is configured to determine, based on one physical resource block PRB pair, a first configuration mode used for a CSI-RS, where a resource element RE occupied in the first configuration mode is obtained by aggregating all or a part of resource elements REs occupied in at least two second configuration modes used for the CSI-RS; the first configuration mode is a configuration mode for more than eight CSI-RS ports, and includes a correspondence between each CSI-RS port and a resource element RE; and the second configuration mode is a configuration mode for eight CSI-RS ports, and includes a correspondence between each CSI-RS port and a resource element RE; and the transmitter is configured to transmit the CSI-RS to user equipment by using the first configuration mode.

With reference to the fifth aspect, in a first possible implementation of the fifth aspect, when there are 12 CSI-RS ports in the first configuration mode, the processor is specifically configured to determine, according to an order of port numbers, that the first eight CSI-RS ports in the first configuration mode occupy all REs occupied in any one of the second configuration modes, and that the last four CSI-RS ports in the first configuration mode occupy a part of REs occupied in one or more other second configuration modes.

With reference to the fifth aspect, in a second possible implementation of the fifth aspect, when there are 16 CSI-RS ports in the first configuration mode, the processor is specifically configured to determine, according to an order of port numbers, that the first eight CSI-RS ports in the first configuration mode occupy all REs occupied in any one of the second configuration modes, and that the last eight CSI-RS ports in the first configuration mode occupy all REs occupied in another second configuration mode, or that the last eight CSI-RS ports in the first configuration mode occupy a part of resource elements REs occupied in a plurality of other second configuration modes.

With reference to the fifth aspect, in a third possible implementation of the fifth aspect, when there are 12 or 16 CSI-RS ports in the first configuration mode, the processor is specifically configured to: determine a part or all of REs in the second configuration mode that are not aggregated and that are in a plurality of PRB pairs in a time-domain or frequency-domain direction, and establish a correspondence between the part or all of the REs that are not aggregated and the CSI-RS ports in the first configuration mode.

With reference to the fifth aspect to the third possible implementation of the fifth aspect, in a fourth possible implementation of the fifth aspect, the processor is further configured to determine a total quantity of first configuration modes corresponding to the plurality of PRB pairs in the time-domain or frequency-domain direction.

According to a sixth aspect, an embodiment of the present invention provides an apparatus for transmitting a channel state information-reference signal CSI-RS. The apparatus is user equipment, and includes a receiver and a memory, where the receiver is configured to receive a CSI-RS transmitted by a base station by using a first configuration mode; and the memory is configured to store the CSI-RS, where the first configuration mode used for the CSI-RS is determined by the base station based on one physical resource block PRB pair; a resource element RE occupied in the first configuration mode is obtained by aggregating all or a part of resource elements REs occupied in at least two second configuration modes used for the CSI-RS; the first configuration mode is a configuration mode for more than eight CSI-RS ports, and includes a correspondence between each CSI-RS port and a resource element RE; and the second configuration mode is a configuration mode for eight CSI-RS ports, and includes a correspondence between each CSI-RS port and a resource element RE.

The embodiments of the present invention provide a method and an apparatus for transmitting a channel state information-reference signal CSI-RS. The method includes: determining, by a base station based on one physical resource block PRB pair, a first configuration mode used for a CSI-RS, where a resource element RE occupied in the first configuration mode is obtained by aggregating all or a part of resource elements REs occupied in at least two second configuration modes used for the CSI-RS; the first configuration mode is a configuration mode for more than eight CSI-RS ports, and includes a correspondence between each CSI-RS port and a resource element RE; and the second configuration mode is a configuration mode for eight CSI-RS ports, and includes a correspondence between each CSI-RS port and a resource element RE; and transmitting, by the base station, the CSI-RS to user equipment by using the first configuration mode. This ensures that a user terminal can receive a CSI-RS signal in time while improving a system throughput, so as to improve channel estimation efficiency.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a flowchart of a method for transmitting a channel state information-reference signal CSI-RS according to an embodiment of the present invention;
FIG. 2 shows five configuration modes, corresponding to one PRB pair, based on eight CSI-RS ports in an LTE release 12 according to the prior art;
FIG. 3A shows a configuration mode 1, corresponding to one PRB pair, based on 12 CSI-RS ports according to an embodiment of the present invention;
FIG. 3B shows a configuration mode 2, corresponding to one PRB pair, based on 12 CSI-RS ports according to an embodiment of the present invention;
FIG. 3C shows a configuration mode 3, corresponding to one PRB pair, based on 12 CSI-RS ports according to an embodiment of the present invention;
FIG. 3D shows a configuration mode 4, corresponding to one PRB pair, based on 12 CSI-RS ports according to an embodiment of the present invention;
FIG. 4A shows a configuration mode 1, corresponding to one PRB pair, based on 16 CSI-RS ports according to an embodiment of the present invention;
FIG. 4B shows a configuration mode 2, corresponding to one PRB pair, based on 16 CSI-RS ports according to an embodiment of the present invention;
FIG. 5 is a schematic structural diagram of an apparatus for transmitting a channel state information-reference signal CSI-RS according to an embodiment of the present invention;
FIG. 6 is a schematic structural diagram of an apparatus for transmitting a channel state information-reference signal CSI-RS according to another embodiment of the present invention;
FIG. 7 is a schematic structural diagram of an apparatus for transmitting a channel state information-reference signal CSI-RS according to still another embodiment of the present invention; and
FIG. 8 is a schematic structural diagram of an apparatus for transmitting a channel state information-reference signal CSI-RS according to yet another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by persons of ordinary skill in the art based on the embodiments of the present invention without creative efforts shall fall within the protection scope of the present invention.

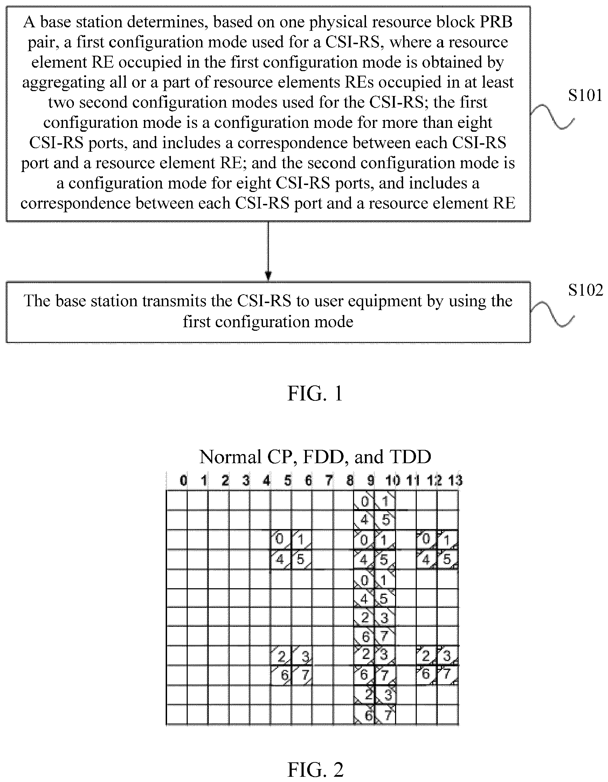

To further improve a throughput of an LTE release 12 system, increasing a quantity of CSI-RS ports is an effective means. FIG. 1 is a flowchart of a method for transmitting a channel state information-reference signal CSI-RS according to an embodiment of the present invention. This embodiment of the present invention is applied to a scenario in which a quantity of CSI-RS ports of a base station has been increased and a configuration mode based on an increased quantity of CSI-RS ports has not been determined currently. This embodiment of the present invention is executed by the base station. As shown in FIG. 1, the method specifically includes the following process:

S101. The base station determines, based on one physical resource block PRB pair, a first configuration mode used for a CSI-RS, where a resource element RE occupied in the first configuration mode is obtained by aggregating all or a part of resource elements REs occupied in at least two second configuration modes used for the CSI-RS; the first configuration mode is a configuration mode for more than eight CSI-RS ports, and includes a correspondence between each CSI-RS port and a resource element RE; and the second configuration mode is a configuration mode for eight CSI-RS ports, and includes a correspondence between each CSI-RS port and a resource element RE.

S102. The base station transmits the CSI-RS to user equipment by using the first configuration mode.

FIG. 2 shows five configuration modes, corresponding to one PRB pair, based on eight CSI-RS ports in an LTE release 12 according to the prior art. As shown in FIG. 2, one PRB pair occupies one subframe in a time domain, and each subframe includes two timeslots, a slot 0 and a slot 1, that are corresponding to, for a normal cyclic prefix, the first seven orthogonal frequency division multiple access (Orthogonal Frequency Division Multiple Access, OFDMA for short) symbols and the last seven OFDMA symbols, respectively. In the figure, a same pattern is used to represent a same second configuration mode, " 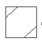 ", " 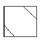 ", " 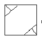 ", " 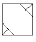 ", and " 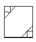 " can be used to represent five second configuration modes, and it is assumed that index numbers corresponding to these five patterns are 0, 1, 2, 3, and 4. Numbers in the figure represent port numbers.

For three-dimension multiple input multiple output (Full-Dimension Multiple Input Multiple Output, FD-MIMO for short) of a current LTE system, a quantity of ports of a base station needs to be increased. If a quantity of REs occupied by a CSI-RS port continues to be increased, and a case in which another reference signal occupies an RE cannot be changed, a quantity of TEs used for sending data is reduced, and a system throughput is reduced. Therefore, a quantity of REs occupied in a configuration mode used by the base station based on an increased quantity of ports is kept the same as a quantity of REs occupied in a configuration mode used by the base station based on eight ports, and a quantity of occupied REs is not further increased. The following provides description by using 12 CSI-RS ports and 16 CSI-RS ports as examples.

In one case, when there are 12 CSI-RS ports in the first configuration mode, that the base station determines, based on one PRB pair, a first configuration mode used for a CSI-RS includes: The base station determines, according to an order of port numbers, that the first eight CSI-RS ports in the first configuration mode occupy all REs occupied in any one of the second configuration modes, and that the last four CSI-RS ports in the first configuration mode occupy a part of REs occupied in one or more other second configuration modes.

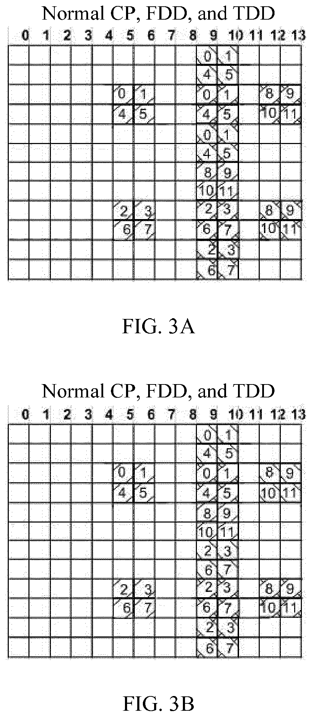

FIG. 3A shows a configuration mode 1, corresponding to one PRB pair, based on 12 CSI-RS ports according to an embodiment of the present invention. As shown in FIG. 3A: 1. The first configuration mode based on 12 CSI-RS ports may be: The first eight ports of the 12 ports currently occupy all REs occupied by eight ports 0 to 7 in a second configuration mode 0, the last four ports use REs occupied in a second configuration mode 1, and new ports 8, 9, 10, and 11 are corresponding to ports 2, 3, 6, and 7 of the original eight ports, respectively; 2. The first configuration mode based on 12 CSI-RS ports may be: The first eight ports of the 12 ports currently occupy all REs occupied by eight ports 0 to 7 in a second configuration mode 3, the last four ports use REs occupied in a second configuration mode 4, and new ports 8, 9, 10, and 11 are corresponding to ports 0, 1,4, and 5 of the original eight ports, respectively; 3. The first configuration mode based on 12 CSI-RS ports may be: The first eight ports of the 12 ports currently occupy all REs occupied by eight ports 0 to 7 in a second configuration mode 2, the last four ports use REs occupied in a second configuration mode 4, and new ports 8, 9, 10, and 11 are corresponding to ports 0, 1, 4, and 5 of the original eight ports, respectively. Therefore, in FIG. 3A, there are currently three first configuration modes based on 12 CSI-RS ports.

FIG. 3B shows a configuration mode 2, corresponding to one PRB pair, based on 12 CSI-RS ports according to an embodiment of the present invention. As shown in FIG. 3B: 1. The first configuration mode based on 12 CSI-RS ports may be: The first eight ports of the 12 ports currently occupy all REs occupied by eight ports 0 to 7 in a second configuration mode 0, the last four ports use REs occupied in a second configuration mode 1, and new ports 8, 9, 10, and 11 are corresponding to ports 2, 3, 6, and 7 of the original eight ports, respectively; 2. The first configuration mode based on 12 CSI-RS ports may be: The first eight ports of the 12 ports currently occupy all REs occupied by eight ports 0 to 7 in a second configuration mode 2, the last four ports use REs occupied in a second configuration mode 4, and new ports 8, 9, 10, and 11 are corresponding to ports 0, 1,4, and 5 of the original eight ports, respectively; 3. The first configuration mode based on 12 CSI-RS ports may be: The first eight ports of the 12 ports currently occupy all REs occupied by eight ports 0 to 7 in a second configuration mode 3, the last four ports use REs occupied in a second configuration mode 4, and new ports 8, 9, 10, and 11 are corresponding to ports 2, 3, 6, and 7 of the original eight ports, respectively. Therefore, in FIG. 3B, there are currently three first configuration modes based on 12 CSI-RS ports.

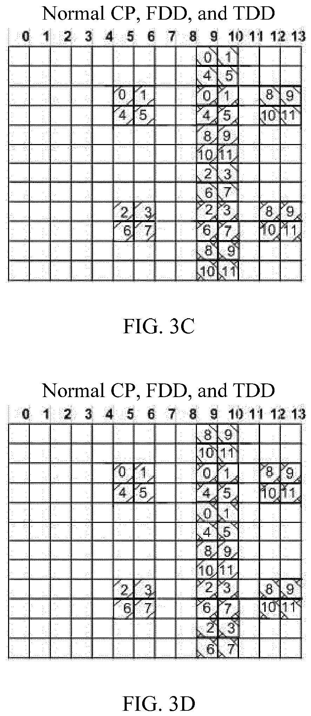

FIG. 3C shows a configuration mode 3, corresponding to one PRB pair, based on 12 CSI-RS ports according to an embodiment of the present invention. As shown in FIG. 3C: 1. The first configuration mode based on 12 CSI-RS ports may be: The first eight ports of the 12 ports currently occupy all REs occupied by eight ports 0 to 7 in a second configuration mode 0, the last four ports use REs occupied in a second configuration mode 1, and new ports 8, 9, 10, and 11 are corresponding to ports 2, 3, 6, and 7 of the original eight ports, respectively; 2. The first configuration mode based on 12 CSI-RS ports may be: The first eight ports of the 12 ports currently occupy all REs occupied by eight ports 0 to 7 in a second configuration mode 2, the last four ports use REs occupied in a second configuration mode 4, and new ports 8, 9, 10, and 11 are corresponding to ports 0, 1,4, and 5 of the original eight ports, respectively; 3. The first configuration mode based on 12 CSI-RS ports may be: The first eight ports of the 12 ports currently occupy all REs occupied by eight ports 0 to 7 in a second configuration mode 3, the last four ports use REs occupied in a second configuration mode 4, and new ports 8, 9, 10, and 11 are corresponding to ports 2, 3, 6, and 7 of the original eight ports, respectively. Therefore, in FIG. 3C, there are currently three first configuration modes based on 12 CSI-RS ports.

FIG. 3D shows a configuration mode 4, corresponding to one PRB pair, based on 12 CSI-RS ports according to an embodiment of the present invention. As shown in FIG. 3D: 1. The first configuration mode based on 12 CSI-RS ports may be: The first eight ports of the 12 ports currently occupy all REs occupied by eight ports 0 to 7 in a second configuration mode 0, the last four ports use REs occupied in a second configuration mode 1, and new ports 8, 9, 10, and 11 are corresponding to ports 2, 3, 6, and 7 of the original eight ports, respectively; 2. The first configuration mode based on 12 CSI-RS ports may be: The first eight ports of the 12 ports currently occupy all REs occupied by eight ports 0 to 7 in a second configuration mode 2, the last four ports use REs occupied in a second configuration mode 4, and new ports 8, 9, 10, and 11 are corresponding to ports 2, 3, 6, and 7 of the original eight ports, respectively; 3. The first configuration mode based on 12 CSI-RS ports may be: The first eight ports of the 12 ports currently occupy all REs occupied by eight ports 0 to 7 in a second configuration mode 1, the last four ports use REs occupied in a second configuration mode 4, and new ports 8, 9, 10, and 11 are corresponding to ports 0, 1, 4, and 5 of the original eight ports, respectively. Therefore, in FIG. 3D, there are currently three first configuration modes based on 12 CSI-RS ports.

In another case, when there are 16 CSI-RS ports in the first configuration mode, that the base station determines, based on one PRB pair, a first configuration mode used for a CSI-RS includes: The base station determines, according to an order of port numbers, that the first eight CSI-RS ports in the first configuration mode occupy all REs occupied in any one of the second configuration modes, and that the last eight CSI-RS ports in the first configuration mode occupy all REs occupied in another second configuration mode, or that the last eight CSI-RS ports in the first configuration mode occupy a part of resource elements REs occupied in a plurality of other second configuration modes.

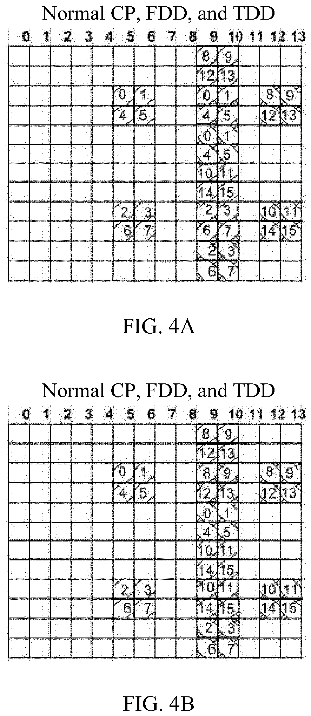

FIG. 4A shows a configuration mode 1, corresponding to one PRB pair, based on 16 CSI-RS ports according to an embodiment of the present invention. As shown in FIG. 4A: 1. The first configuration mode based on 16 CSI-RS ports may be: The first eight ports of the 12 ports currently occupy all REs occupied by eight ports 0 to 7 in a second configuration mode 0, and the last eight ports use REs occupied in a second configuration mode 1; 2. The first configuration mode based on 16 CSI-RS ports may be: The first eight ports of the 12 ports currently occupy all REs occupied by eight ports 0 to 7 in a second configuration mode 3, and the last eight ports use REs occupied in a second configuration mode 4. Therefore, in FIG. 3A, there are currently three first configuration modes based on 12 CSI-RS ports.

FIG. 4B shows a configuration mode 2, corresponding to one PRB pair, based on 16 CSI-RS ports according to an embodiment of the present invention. As shown in FIG. 4B: 1. The first configuration mode based on 16 CSI-RS ports may be: The first eight ports of the 12 ports currently occupy all REs occupied by eight ports 0 to 7 in a second configuration mode 0, and the last eight ports use REs occupied in a second configuration mode 1; 2. The first configuration mode based on 16 CSI-RS ports may be: The first eight ports of the 12 ports currently occupy all REs occupied by eight ports 0 to 7 in a second configuration mode 3, and the last eight ports use REs occupied in a second configuration mode 4. Therefore, in FIG. 3A, there are currently three first configuration modes based on 12 CSI-RS ports. The rest REs may be corresponding to ports 8 to 15.

Optionally, there are 12 or 16 CSI-RS ports in the first configuration mode, and that the base station determines, based on one PRB pair, a first configuration mode used for a CSI-RS includes the following operations:

The base station determines a part or all of REs in the second configuration mode that are not aggregated and that are in a plurality of PRB pairs in a time-domain or frequency-domain direction, and establishes a correspondence between the part or all of the REs that are not aggregated and the CSI-RS ports in the first configuration mode.

Further, the base station determines a total quantity of first configuration modes corresponding to the plurality of PRB pairs in the time-domain or frequency-domain direction.

For example, with reference to FIG. 3A to FIG. 3C, the base station determines REs in second configuration modes that are not aggregated and that are in the three PRB pairs. In FIG. 3A, REs corresponding to " 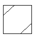 " are not aggregated; in FIG. 3B, REs corresponding to " 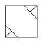 " are not aggregated; and in FIG. 3C, REs corresponding to " 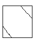 " are not aggregated. Therefore, a correspondence between a part or all of REs that are not aggregated and each CSI-RS port may be established as a first configuration mode. Finally, it is determined that there are three first configuration modes in each of FIG. 3A to FIG. 3C. With reference to FIG. 3A to FIG. 3C, there is one first configuration mode. Therefore, there are 10 first configuration modes in total corresponding to the three PRB pairs.

For another example, with reference to FIG. 4A and FIG. 4B, the base station determines REs that are not aggregated in second configuration modes corresponding to two PRB pairs. In FIG. 4A, REs corresponding to " 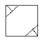 " are not aggregated; and in FIG. 4B, REs corresponding to " 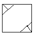 " are not aggregated. Therefore, a correspondence between a part or all of REs that are not aggregated and each CSI-RS port may be established as a first configuration mode. Finally, it is determined that there are two first configuration modes in each of FIG. 4A and FIG. 4B, With reference to FIG. 4A and FIG. 4B, there is one first configuration mode. Therefore, there are five first configuration modes in total corresponding to the two PRB pairs.

The embodiments of the present invention provide a method for transmitting a channel state information-reference signal CSI-RS, including: determining, by a base station based on one physical resource block PRB pair, a first configuration mode used for a CSI-RS, where a resource element RE occupied in the first configuration mode is obtained by aggregating all or a part of resource elements REs occupied in at least two second configuration modes used for the CSI-RS; the first configuration mode is a configuration mode for more than eight CSI-RS ports, and includes a correspondence between each CSI-RS port and a resource element RE; and the second configuration mode is a configuration mode for eight CSI-RS ports, and includes a correspondence between each CSI-RS port and a resource element RE; and transmitting, by the base station, the CSI-RS to user equipment by using the first configuration mode. According to the embodiments of the present invention, a system throughput is improved by increasing a quantity of ports, and the quantity of ports has been increased based on one PRB pair in the embodiments of the present invention. Therefore, it is ensured that a user terminal can receive a CSI-RS signal in time, so as to improve channel assessment efficiency.

Another embodiment of the present invention provides a method for transmitting a channel state information-reference signal CSI-RS. The method is executed by user equipment, and the method specifically includes the following process: User equipment receives a CSI-RS transmitted by a base station by using a first configuration mode, where the first configuration mode used for the CSI-RS is determined by the base station based on one physical resource block PRB pair; a resource element RE occupied in the first configuration mode is obtained by aggregating all or a part of resource elements REs occupied in at least two second configuration modes used for the CSI-RS; the first configuration mode is a configuration mode for more than eight CSI-RS ports, and includes a correspondence between each CSI-RS port and a resource element RE; and the second configuration mode is a configuration mode for eight CSI-RS ports, and includes a correspondence between each CSI-RS port and a resource element RE.

In one case, when there are 12 CSI-RS ports in the first configuration mode, that the first configuration mode used for the CSI-RS is determined by the base station based on one physical resource block PRB pair includes: The base station determines, according to an order of port numbers, that the first eight CSI-RS ports in the first configuration mode occupy all REs occupied in any one of second configuration modes, and that the last four CSI-RS ports in the first configuration mode occupy a part of REs occupied in one or more other second configuration modes.

In another case, when there are 16 CSI-RS ports in the first configuration mode, that the first configuration mode used for the CSI-RS is determined by the base station based on one physical resource block PRB pair includes: The base station determines, according to an order of port numbers, that the first eight CSI-RS ports in the first configuration mode occupy all REs occupied in any one of the second configuration modes, and that the last eight CSI-RS ports in the first configuration mode occupy all REs occupied in another second configuration mode, or that the last eight CSI-RS ports in the first configuration mode occupy a part of resource elements REs occupied in a plurality of other second configuration modes.

Optionally, when there are 12 or 16 CSI-RS ports in the first configuration mode, that the first configuration mode used for the CSI-RS is determined by the base station based on one physical resource block PRB pair includes: The base station determines a part or all of REs in the second configuration mode that are not aggregated and that are in a plurality of PRB pairs in a time-domain or frequency-domain direction, and establishes a correspondence between the part or all of the REs that are not aggregated and the CSI-RS ports in the first configuration mode.

An embodiment of the present invention provides a method for transmitting a channel state information-reference signal CSI-RS, including: receiving, by user equipment, a CSI-RS transmitted by a base station by using a first configuration mode, where the first configuration mode used for the CSI-RS is determined by the base station based on one physical resource block PRB pair; a resource element RE occupied in the first configuration mode is obtained by aggregating all or a part of resource elements REs occupied in at least two second configuration modes used for the CSI-RS; the first configuration mode is a configuration mode for more than eight CSI-RS ports, and includes a correspondence between each CSI-RS port and a resource element RE; and the second configuration mode is a configuration mode for eight CSI-RS ports, and includes a correspondence between each CSI-RS port and a resource element RE. According to this embodiment of the present invention, a system throughput is improved by increasing a quantity of ports, and the quantity of ports has been increased based on one PRB pair in this embodiment of the present invention. Therefore, it is ensured that a user terminal can receive a CSI-RS signal in time, so as to improve channel assessment efficiency.

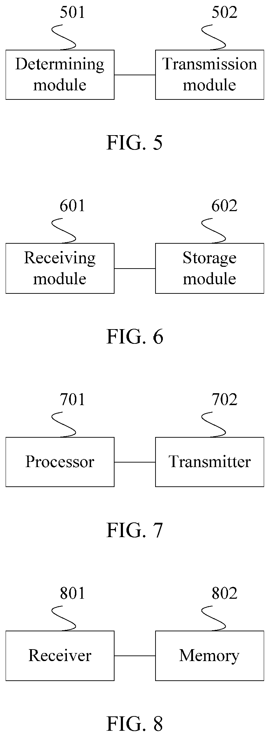

FIG. 5 is a schematic structural diagram of an apparatus for transmitting a channel state information-reference signal CSI-RS according to an embodiment of the present invention. The apparatus is a base station, and includes a determining module 501 and a transmission module 502. The determining module 501 is configured to determine, based on one physical resource block PRB pair, a first configuration mode used for a CSI-RS, where a resource element RE occupied in the first configuration mode is obtained by aggregating all or a part of resource elements REs occupied in at least two second configuration modes used for the CSI-RS; the first configuration mode is a configuration mode for more than eight CSI-RS ports, and includes a correspondence between each CSI-RS port and a resource element RE; and the second configuration mode is a configuration mode for eight CSI-RS ports, and includes a correspondence between each CSI-RS port and a resource element RE. The transmission module 502 is configured to transmit the CSI-RS to user equipment by using the first configuration mode.

In one case, when there are 12 CSI-RS ports in the first configuration mode, the determining module 501 is specifically configured to: determine, according to an order of port numbers, that the first eight CSI-RS ports in the first configuration mode occupy all REs occupied in any one of the second configuration modes, and that the last four CSI-RS ports in the first configuration mode occupy a part of REs occupied in one or more other second configuration modes.

In another case, there are 16 CSI-RS ports in the first configuration mode, and the determining module 501 is specifically configured to: determine, according to an order of port numbers, that the first eight CSI-RS ports in the first configuration mode occupy all REs occupied in any one of the second configuration modes, and that the last eight CSI-RS ports in the first configuration mode occupy all REs occupied in another second configuration mode, or that the last eight CSI-RS ports in the first configuration mode occupy a part of resource elements REs occupied in a plurality of other second configuration modes.

Optionally, when there are 12 or 16 CSI-RS ports in the first configuration mode, the determining module 501 is specifically configured to: determine a part or all of REs in the second configuration mode that are not aggregated and that are in a plurality of PRB pairs in a time-domain or frequency-domain direction, and establish a correspondence between the part or all of the REs that are not aggregated and the CSI-RS ports in the first configuration mode.

Further, the determining module 501 is further configured to determine a total quantity of first configuration modes corresponding to the plurality of PRB pairs in the time-domain or frequency-domain direction.

The apparatus for transmitting a channel state information-reference signal CSI-RS provided in this embodiment is configured to execute an implementation technical solution of the method corresponding to FIG. 1, and implementation principles and technical effects thereof are similar, and details are not described herein again.

FIG. 6 is a schematic structural diagram of an apparatus for transmitting a channel state information-reference signal CSI-RS according to another embodiment of the present invention. The apparatus is user equipment, and includes a receiving module 601 and a storage module 602. The receiving module 601 is configured to receive a CSI-RS transmitted by a base station by using a first configuration mode. The storage module 602 is configured to store the CSI-RS, where the first configuration mode used for the CSI-RS is determined by the base station based on one physical resource block PRB pair; a resource element RE occupied in the first configuration mode is obtained by aggregating all or a part of resource elements REs occupied in at least two second configuration modes used for the CSI-RS; the first configuration mode is a configuration mode for more than eight CSI-RS ports, and includes a correspondence between each CSI-RS port and a resource element RE; and the second configuration mode is a configuration mode for eight CSI-RS ports, and includes a correspondence between each CSI-RS port and a resource element RE.

The apparatus for transmitting a channel state information-reference signal CSI-RS provided in this embodiment is configured to execute an implementation technical solution of a method corresponding to the user equipment, and implementation principles and technical effects thereof are similar, and details are not described herein again.

FIG. 7 is a schematic structural diagram of an apparatus for transmitting a channel state information-reference signal CSI-RS according to still another embodiment of the present invention. The apparatus is a base station, and includes a processor 701 and a transmitter 702. The processor 701 is configured to determine, based on one physical resource block PRB pair, a first configuration mode used for a CSI-RS, where a resource element RE occupied in the first configuration mode is obtained by aggregating all or a part of resource elements REs occupied in at least two second configuration modes used for the CSI-RS; the first configuration mode is a configuration mode for more than eight CSI-RS ports, and includes a correspondence between each CSI-RS port and a resource element RE; and the second configuration mode is a configuration mode for eight CSI-RS ports, and includes a correspondence between each CSI-RS port and a resource element RE. The transmitter 702 is configured to transmit the CSI-RS to user equipment by using the first configuration mode.

In a case, when there are 12 CSI-RS ports in the first configuration mode, the processor 701 is specifically configured to: determine, according to an order of port numbers, that the first eight CSI-RS ports in the first configuration mode occupy all REs occupied in any one of the second configuration modes, and that the last four CSI-RS ports in the first configuration mode occupy a part of REs occupied in one or more other second configuration modes.

In another case, when there are 16 CSI-RS ports in the first configuration mode, the processor 701 is specifically configured to: determine, according to an order of port numbers, that the first eight CSI-RS ports in the first configuration mode occupy all REs occupied in any one of the second configuration modes, and that the last eight CSI-RS ports in the first configuration mode occupy all REs occupied in another second configuration mode, or that the last eight CSI-RS ports in the first configuration mode occupy a part of resource elements REs occupied in a plurality of other second configuration modes.

Optionally, when there are 12 or 16 CSI-RS ports in the first configuration mode, the processor 701 is specifically configured to: determine a part or all of REs in the second configuration mode that are not aggregated and that are in a plurality of PRB pairs in a time-domain or frequency-domain direction, and establish a correspondence between the part or all of the REs that are not aggregated and the CSI-RS ports in the first configuration mode.

Further, the processor 701 is further configured to determine a total quantity of first configuration modes corresponding to the plurality of PRB pairs in the time-domain or frequency-domain direction.

The apparatus for transmitting a channel state information-reference signal CSI-RS provided in this embodiment is configured to execute an implementation technical solution of the method corresponding to FIG. 1, and implementation principles and technical effects thereof are similar, and details are not described herein again.

FIG. 8 is a schematic structural diagram of an apparatus for transmitting a channel state information-reference signal CSI-RS according to yet another embodiment of the present invention. The apparatus is user equipment, and includes a receiver 801 and a memory 802. The receiver 801 is configured to receive a CSI-RS transmitted by a base station by using a first configuration mode. The memory 802 is configured to store the CSI-RS. The first configuration mode used for the CSI-RS is determined by the base station based on one physical resource block PRB pair. A resource element RE occupied in the first configuration mode is obtained by aggregating all or a part of resource elements REs occupied in at least two second configuration modes used for the CSI-RS. The first configuration mode is a configuration mode for more than eight CSI-RS ports, and includes a correspondence between each CSI-RS port and a resource element RE. The second configuration mode is a configuration mode for eight CSI-RS ports, and includes a correspondence between each CSI-RS port and a resource element RE.

The apparatus for transmitting a channel state information-reference signal CSI-RS provided in this embodiment is configured to execute an implementation technical solution of a method corresponding to the user equipment, and implementation principles and technical effects thereof are similar, and details are not described herein again.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A method for transmitting a channel state information-reference signal CSI-RS, comprising:
determining, by a base station based on one physical resource block PRB pair, a first configuration mode used for a CSI-RS, wherein
a resource element RE occupied in the first configuration mode is obtained by aggregating all or a part of resource elements REs occupied in at least two second configuration modes used for the CSI-RS;
the first configuration mode is a configuration mode for more than eight CSI-RS ports, and comprises a correspondence between each CSI-RS port and a resource element RE; and
the second configuration mode is a configuration mode for eight CSI-RS ports, and comprises a correspondence between each CSI-RS port and a resource element RE; and
transmitting, by the base station, the CSI-RS to user equipment by using the first configuration mode.

2. The method according to claim 1, wherein
when there are 12 CSI-RS ports in the first configuration mode,
the determining, by a base station based on one PRB pair, a first configuration mode used for a CSI-RS comprises:
determining, by the base station according to an order of port numbers, that the first eight CSI-RS ports in the first configuration mode occupy all REs occupied in any one of the second configuration modes, and that the last four CSI-RS ports in the first configuration mode occupy a part of REs occupied in one or more other second configuration modes.

3. The method according to claim 1, wherein
when there are 16 CSI-RS ports in the first configuration mode,
the determining, by a base station based on one PRB pair, a first configuration mode used for a CSI-RS comprises:
determining, by the base station according to an order of port numbers, that the first eight CSI-RS ports in the first configuration mode occupy all REs occupied in any one of the second configuration modes, and that the last eight CSI-RS ports in the first configuration mode occupy all REs occupied in another second configuration mode, or that the last eight CSI-RS ports in the first configuration mode occupy a part of resource elements REs occupied in a plurality of other second configuration modes.

4. The method according to claim 1, wherein when there are 12 or 16 CSI-RS ports in the first configuration mode,
the determining, by a base station based on one PRB pair, a first configuration mode used for a CSI-RS comprises:
determining, by the base station, a part or all of REs in the second configuration mode that are not aggregated and that are in a plurality of PRB pairs in a time-domain or frequency-domain direction, and establishing a correspondence between the part or all of the REs that are not aggregated and the CSI-RS ports in the first configuration mode.

5. The method according to any one of claims 1 to 4, further comprising:
determining, by the base station, a total quantity of first configuration modes corresponding to the plurality of PRB pairs in the time-domain or frequency-domain direction.

6. A method for transmitting a channel state information-reference signal CSI-RS, comprising:
receiving, by user equipment, a CSI-RS transmitted by a base station by using a first configuration mode, wherein
the first configuration mode used for the CSI-RS is determined by the base station based on one physical resource block PRB pair;
a resource element RE occupied in the first configuration mode is obtained by aggregating all or a part of resource elements REs occupied in at least two second configuration modes used for the CSI-RS;
the first configuration mode is a configuration mode for more than eight CSI-RS ports, and comprises a correspondence between each CSI-RS port and a resource element RE; and
the second configuration mode is a configuration mode for eight CSI-RS ports, and comprises a correspondence between each CSI-RS port and a resource element RE.

7. The method according to claim 6, wherein
when there are 12 CSI-RS ports in the first configuration mode,
that the first configuration mode used for the CSI-RS is determined by the base station based on one physical resource block PRB pair comprises:
determining, by the base station according to an order of port numbers, that the first eight CSI-RS ports in the first configuration mode occupy all REs occupied in any one of the second configuration modes, and that the last four CSI-RS ports in the first configuration mode occupy a part of REs occupied in one or more other second configuration modes.

8. The method according to claim 6, wherein
when there are 16 CSI-RS ports in the first configuration mode,
that the first configuration mode used for the CSI-RS is determined by the base station based on one physical resource block PRB pair comprises:
determining, by the base station according to an order of port numbers, that the first eight CSI-RS ports in the first configuration mode occupy all REs occupied in any one of the second configuration modes, and that the last eight CSI-RS ports in the first configuration mode occupy all REs occupied in another second configuration mode, or that the last eight CSI-RS ports in the first configuration mode occupy a part of resource elements REs occupied in a plurality of other second configuration modes.

9. The method according to claim 6, wherein
when there are 12 or 16 CSI-RS ports in the first configuration mode,
that the first configuration mode used for the CSI-RS is determined by the base station based on one physical resource block PRB pair comprises:
determining, by the base station, a part or all of REs in the second configuration mode that are not aggregated and that are in a plurality of PRB pairs in a time-domain or frequency-domain direction, and establishing a correspondence between the part or all of the REs that are not aggregated and the CSI-RS ports in the first configuration mode.

10. An apparatus for transmitting a channel state information-reference signal CSI-RS, wherein the apparatus is a base station, and comprises a determining module and a transmission module, wherein
the determining module is configured to determine, based on one physical resource block PRB pair, a first configuration mode used for a CSI-RS, wherein
a resource element RE occupied in the first configuration mode is obtained by aggregating all or a part of resource elements REs occupied in at least two second configuration modes used for the CSI-RS;
the first configuration mode is a configuration mode for more than eight CSI-RS ports, and comprises a correspondence between each CSI-RS port and a resource element RE; and
the second configuration mode is a configuration mode for eight CSI-RS ports, and comprises a correspondence between each CSI-RS port and a resource element RE; and
the transmission module is configured to transmit the CSI-RS to user equipment by using the first configuration mode.

11. The apparatus according to claim 10, wherein
when there are 12 CSI-RS ports in the first configuration mode,
the determining module is specifically configured to:
determine, according to an order of port numbers, that the first eight CSI-RS ports in the first configuration mode occupy all REs occupied in any one of the second configuration modes, and that the last four CSI-RS ports in the first configuration mode occupy a part of REs occupied in one or more other second configuration modes.

12. The apparatus according to claim 10, wherein
when there are 16 CSI-RS ports in the first configuration mode,
the determining module is specifically configured to:
determine, according to an order of port numbers, that the first eight CSI-RS ports in the first configuration mode occupy all REs occupied in any one of the second configuration modes, and that the last eight CSI-RS ports in the first configuration mode occupy all REs occupied in another second configuration mode, or that the last eight CSI-RS ports in the first configuration mode occupy a part of resource elements REs occupied in a plurality of other second configuration modes.

13. The apparatus according to claim 10, wherein when there are 12 or 16 CSI-RS ports in the first configuration mode,
the determining module is specifically configured to:
determine a part or all of REs in the second configuration mode that are not aggregated and that are in a plurality of PRB pairs in a time-domain or frequency-domain direction, and establish a correspondence between the part or all of the REs that are not aggregated and the CSI-RS ports in the first configuration mode.

14. The apparatus according to any one of claims 10 to 13, wherein the determining module is further configured to:
determine a total quantity of first configuration modes corresponding to the plurality of PRB pairs in the time-domain or frequency-domain direction.

15. An apparatus for transmitting a channel state information-reference signal CSI-RS, wherein the apparatus is user equipment, and comprises a receiving module and a storage module, wherein
the receiving module is configured to receive a CSI-RS transmitted by a base station by using a first configuration mode; and
the storage module is configured to store the CSI-RS, wherein
the first configuration mode used for the CSI-RS is determined by the base station based on one physical resource block PRB pair;
a resource element RE occupied in the first configuration mode is obtained by aggregating all or a part of resource elements REs occupied in at least two second configuration modes used for the CSI-RS;
the first configuration mode is a configuration mode for more than eight CSI-RS ports, and comprises a correspondence between each CSI-RS port and a resource element RE; and
the second configuration mode is a configuration mode for eight CSI-RS ports, and comprises a correspondence between each CSI-RS port and a resource element RE.

16. An apparatus for transmitting a channel state information-reference signal CSI-RS, wherein the apparatus is a base station, and comprises a processor and a transmitter, wherein
the processor is configured to determine, based on one physical resource block PRB pair, a first configuration mode used for a CSI-RS, wherein
a resource element RE occupied in the first configuration mode is obtained by aggregating all or a part of resource elements REs occupied in at least two second configuration modes used for the CSI-RS;
the first configuration mode is a configuration mode for more than eight CSI-RS ports, and comprises a correspondence between each CSI-RS port and a resource element RE; and
the second configuration mode is a configuration mode for eight CSI-RS ports, and comprises a correspondence between each CSI-RS port and a resource element RE; and
the transmitter is configured to transmit the CSI-RS to user equipment by using the first configuration mode.

17. The apparatus according to claim 16, wherein
when there are 12 CSI-RS ports in the first configuration mode,
the processor is specifically configured to:
determine, according to an order of port numbers, that the first eight CSI-RS ports in the first configuration mode occupy all REs occupied in any one of the second configuration modes, and that the last four CSI-RS ports in the first configuration mode occupy a part of REs occupied in one or more other second configuration modes.

18. The apparatus according to claim 16, wherein
when there are 16 CSI-RS ports in the first configuration mode,
the processor is specifically configured to:
determine, according to an order of port numbers, that the first eight CSI-RS ports in the first configuration mode occupy all REs occupied in any one of the second configuration modes, and that the last eight CSI-RS ports in the first configuration mode occupy all REs occupied in another second configuration mode, or that the last eight CSI-RS ports in the first configuration mode occupy a part of resource elements REs occupied in a plurality of other second configuration modes.

19. The apparatus according to claim 16, wherein when there are 12 or 16 CSI-RS ports in the first configuration mode,
the processor is specifically configured to:
determine a part or all of REs in the second configuration mode that are not aggregated and that are in a plurality of PRB pairs in a time-domain or frequency-domain direction, and establish a correspondence between the part or all of the REs that are not aggregated and the CSI-RS ports in the first configuration mode.

20. The apparatus according to any one of claims 16 to 19, wherein the processor is further configured to:
determine a total quantity of first configuration modes corresponding to the plurality of PRB pairs in the time-domain or frequency-domain direction.

21. An apparatus for transmitting a channel state information-reference signal CSI-RS, wherein the apparatus is user equipment, and comprises a receiver and a memory, wherein
the receiver is configured to receive a CSI-RS transmitted by a base station by using a first configuration mode; and
the memory is configured to store the CSI-RS, wherein
the first configuration mode used for the CSI-RS is determined by the base station based on one physical resource block PRB pair;
a resource element RE occupied in the first configuration mode is obtained by aggregating all or a part of resource elements REs occupied in at least two second configuration modes used for the CSI-RS;
the first configuration mode is a configuration mode for more than eight CSI-RS ports, and comprises a correspondence between each CSI-RS port and a resource element RE; and
the second configuration mode is a configuration mode for eight CSI-RS ports, and comprises a correspondence between each CSI-RS port and a resource element RE.
